# EUROPEAN PATENT APPLICATION

(11) **EP 4 700 450 A2**
(43) Date of publication of application: **25.02.2026**
(21) Application number: 25204471.4
(22) Date of filing: 30.12.2015
(51) Int. Cl.: G02B 7/00

(54) **RETICLE RETENTION FOR OPTICAL APPARATUS**

(30) Priority: 30.12.2014 US 201462097996 P
(62) Divisional of application: 20180234.5
(71) Applicant: Sheltered Wings, Inc., Middleton, Wisconsin 53562 (US)
(72) Inventor: HAMILTON, David M., Middleton, 53562 (US); HAMILTON, Samuel J., Middleton, 53562 (US); PALKOWITSH, Gregory, Lee, Middleton, 53562 (US); HAVENS, Calen, Shane, Middleton, 53562 (US)
(74) Representative: Barker Brettell LLP

(57) **Abstract**

The disclosure relates to a reticle cell 22. The reticle cell comprises one or more pieces of reticle glass 28 held inside a reticle ring 26 by a retention washer 30, and a retention ring 32 that retains the retention washer and engages the reticle ring and the reticle glass. The disclosure also relates to an erector tube 10 comprising the or a reticle cell.

## Description

### CROSS-REFERENCE TO RELATED APPLICATIONS

This application claims priority to U.S. Provisional Patent Application No. 62/097,996 filed December 30, 2014, which is incorporated herein by reference in its entirety.

### FIELD

The disclosure relates generally to optical sighting devices. More particularly, the disclosure relates to a reticle for use in optical sighting devices.

### BACKGROUND

Reticles are used in optical sighting devices for aiming and for measuring distances or sizes of objects. Commonly referred to as "crosshairs," various types of reticles can be used in optical sighting devices, such as riflescopes. Reticles are typically made of glass and include wire or may be etched to produce the crosshair pattern when viewed through the scope. Optical sighting devices include a reticle placed at a focal plane, and carried by an erector tube. The erector tube houses both the magnifying lenses and the reticle assembly within a main tube. The erector tube moves as a shooter or spotter adjusts the scope for windage and elevation. Securing and accurately positioning the reticle within the erector tube is critical to the accuracy of the scope.

Typical optical sighting devices like the riflescope have several drawbacks with regard to reticle use and assembly including labor intensive assembly, difficulty in maintaining the position of the reticle, and tunneling in the field of view of the user, which can be distracting and decrease accuracy of the user.

As such, there is a need for a reduced cost erector tube assembly that allows a reticle to be accurately, securely, and consistently attached. In addition, there is a need for an optical sighting device that provides a perfectly centered reticle in the field of view that eliminates the need for a view ring that reduces the apparent field of view, increases the tunneling effect, and causes an asymmetrical field of view.

It will be understood by those skilled in the art that one or more aspects disclosed herein can meet certain objectives, while one or more other aspects can lead to certain other objectives. Other objects, features, benefits and advantages of the disclosure will be readily apparent to those skilled in the art. Such objects, features, benefits and advantages will be apparent from the above as taken in conjunction with the accompanying figures and all reasonable inferences to be drawn therefrom.

### BRIEF SUMMARY

In one embodiment, the disclosure relates to a reticle. In another embodiment, the disclosure relates to a reticle cell. In another embodiment, the disclosure relates to an erector tube comprising a reticle. In yet another embodiment, the disclosure relates to an erector tube comprising a reticle cell.

In still another embodiment, the disclosure relates to a reticle for an optical sighting device. In another embodiment, the disclosure relates to a reticle cell for an optical sighting device. In yet another embodiment, the disclosure relates to an erector tube comprising a reticle cell for an optical sighting device. In one embodiment, the optical sighting device includes but is not limited to optical lens sights, telescopic sights, telescopes, optical lens scopes, spotting scopes, rifle scopes, handgun scopes, range finders; binoculars, monoculars and tripods. In another embodiment, the optical sighting device is for a firearm, including but not limited to a rifle and a handgun.

In one embodiment, the disclosure relates to a reticle cell comprising: one or more pieces of reticle glass held inside a reticle ring by a retention washer; and a retention ring that retains the retention washer and engages the reticle ring and the reticle glass. In another embodiment, the retention washer further includes tabs that engage corresponding channels on the inside of the reticle ring to prevent rotation of the reticle glass.

In another embodiment, the disclosure relates to an erector tube comprising a reticle cell, wherein the reticle cell has one or more pieces of reticle glass held inside a reticle ring by a retention washer; and a retention ring that retains the retention washer and engages the reticle ring and the reticle glass.

In yet another embodiment, the disclosure relates to an erector tube comprising an inner tube, wherein the reticle cell is disposed inside collet leaves arranged around an objective lens of said inner tube.

In still another embodiment, the disclosure relates to an erector tube further comprising a reticle collet lock ring that engages the inner tube so that the collet leaves engage the reticle cell to retain the reticle cell within the inner tube.

In yet another embodiment, the disclosure relates to an erector tube for an optical sighting device comprising: an outer tube with a first end and a second end; an inner tube disposed within the outer tube having an objective lens end and an eyepiece end; the inner tube further including a plurality of collet leaves arranged around the objective lens end and having external threads integrally formed on an outside surface of the inner tube adjacent the plurality of collet leaves; a reticle cell having at least one reticle glass held inside a reticle ring by a retention washer and a retention ring; a reticle collet lock ring having internal threads and a tapered inner surface adjacent the internal threads; and the reticle cell disposed inside the collet leaves; and the internal threads of the reticle collet ring engaged with the external threads of the inner tube so that the plurality of collet leaves engage the reticle cell to retain the reticle cell within the inner tube.

In one embodiment, the erector tube has a reticle cell having one or more pieces of reticle glass coupled to a reticle ring.

In still another embodiment, the erector tube has a reticle collet ring that engages aspects of the inner tube so that the reticle cell is retained within the inner tube.

In yet another embodiment, the disclosure relates to an erector tube for an optical sighting device comprising: an outer tube with a first end and a second end; an inner tube disposed within the outer tube having an objective lens end and an eyepiece end; the inner tube further including fixtures arranged around the objective lens end and having engaging aspects on an outside surface of the inner tube adjacent the fixtures; a reticle cell having at least one reticle glass coupled to a reticle ring; a reticle collet lock ring that can interact with the engaging aspects of the inner tube; and the reticle cell disposed inside fixtures arranged around the objective lens; and the reticle collet ring engaged with engaging aspects of the inner tube so that the fixtures engage the reticle cell to retain the reticle cell within the inner tube.

### BRIEF DESCRIPTION OF THE DRAWINGS

FIG. 1 is a side view of a typical optical sighting device;
FIG. 2 is a section view of the optical sighting device of FIG. 1 taken generally along the line 2-2 in FIG. 1;
FIG. 3 is a photograph of a typical erector tube for an optical sighting device;
FIG. 4 is a photograph of the erector tube of FIG. 3 showing a nut attached to one end of the erector tube;
FIG. 5 is a detail photograph of the erector tube of FIG. 3 showing a nut attached to one end of the erector tube;
FIG. 6 is a photograph of the erector tube of FIG. 3 showing a reticle cell and clamping nut that may be attached to the erector tube;
FIG. 7 is a photograph of the erector tube of FIG. 3 showing the clamping nut attached to the reticle cell;
FIG. 8 is a photograph of the erector tube of FIG. 3 with a reticle cell attached to the erector tube;
FIG. 9 is a perspective view of an erector tube for an optical sighting device in accordance with the methods and apparatuses disclosed herein;
FIG. 10 is a cross-section view of the erector tube of FIG. 9 taken generally along the line 10-10 in FIG. 9;
FIG. 11 is an exploded perspective view of the erector tube of FIG. 9;
FIG. 12 is another exploded perspective view of the erector tube of FIG. 9; and
FIG. 13 is a partially exploded detail view of a reticle attachment end of the erector tube of FIG. 9.

### DETAILED DESCRIPTION

For purposes of the description hereinafter, the terms "upper," "lower," "vertical," "horizontal," "axial," "top," "bottom," "aft," "behind," and derivatives thereof shall relate to the disclosure, as it is oriented in the drawing FIGS. However, it is to be understood that the methods and apparatuses disclosed herein may assume various alternative configurations except where expressly specified to the contrary. It is also to be understood that the specific elements illustrated in the FIGS. and described in the following specification are simply exemplary embodiments of the invention. Therefore, specific dimensions, orientations and other physical characteristics related to the embodiments disclosed herein are not to be considered limiting.

As used herein, a collet is a holding device that forms a collar around an object to be held and exerts a strong force, for example, a clamping force, on the object when it is tightened, usually by the use of a tapered outer collar.

An external collet is a sleeve with a (normally) cylindrical inner surface and a conical outer surface. The collet can be squeezed against a matching taper such that its inner surface contracts to a slightly smaller diameter, squeezing the object whose secure holding is desired. Most often this is achieved with a spring collet, made of spring steel, with one or more kerf cuts along its length to allow it to expand and contract.

An alternative collet design is one that has several tapered steel blocks (essentially tapered gauge blocks) held in circular position (like the points of a star, or indeed the jaws of a jawed chuck) by a flexible binding medium (typically synthetic or natural rubber).

An internal collet is used to lock two telescoping tubes together. In this case, the collet is in the form of a truncated cone drilled and threaded down the centerline. The collet diameter matches the bore of the inner tube, having the larger end slightly greater than the bore while the smaller diameter is slightly less than the bore. A threaded stud, anchored at its other end to the tube, is then used to pull the collet into the tube. The increasing diameter of the collet forces the inner tube to expand and be pushed against the inner wall of the outer tube thus locking the two tubes together. The inner tube is often slotted to facilitate this expansion.

As used herein, the statement that two or more parts are "coupled" together means that the parts are joined together either directly or joined together indirectly through one or more intermediate parts.

As used herein, the term "engaging aspect(s)" refers to a mechanism by which objects can interact with one another. In one embodiment, the engaging aspect can be threads on a first object manufactured to accept or interact with a second object. In another embodiment, the engaging aspect is a fastener.

As used herein, the term "fastener" refers to any suitable fastening, connecting or tightening mechanism such as dowel pins, fasteners, rivets and the like.

As used herein, an erector tube is an apparatus that houses a reticle assembly within a main tube. The erector tube may also house the magnifying lenses. In one embodiment, an erector tube comprises an outer tube and an inner tube.

As used herein, first focal plane optics have the reticle installed towards the front of the erector or forward of the lenses that help control the magnification range of the scope. As that scope goes through its magnification range, the reticle will appear to change size, becoming thinner or thicker depending on the magnification. However, the reticle isn't actually changing size but is in fact maintaining its size relative to the target image in the scope meaning that its sub-tensions stay the same. With the sub-tensions staying the same throughout the magnification range estimation, trajectory compensation, and zeroing can be performed on any power greatly increasing the scopes utility.

As used herein, a reticle is a network of fine lines, dots, cross hairs, or wires in the focal plane of the eyepiece of an optical instrument. A plain reticle has two lines that intersect in the center of view.

A duplex reticle has thick lines that taper to thin lines near the center of view. In a duplex, the reticle lines are thicker on the edges, then taper to thin in the center of the image. The thick sections are easier to see against a dark background and the thin lines provide a more precise aiming point.

The mil dot reticle is a military wherein small dots are placed at precise distances from one another. They enable the shooter to measure angle downrange while looking through the scope. The mil unit of angular measurement is used because a mil is smaller than a degree of angle. There are 6,400 mils in a full circle.

As used herein, in second focal plane optic, the reticle is installed towards the rear of the erector, past the lenses that help control the magnification of the image. In this case, the scopes' reticle will appear to stay the same size relative to the shooter throughout its magnification range. Since the reticle isn't changing size relative to the target, the reticle sub-tensions are only good for range estimation and trajectory compensation at one spot along the magnification range, typically on the highest power.

As used herein, a tab refers to a flap or strip or piece of material attached to or projecting from an object. In one embodiment, the tab is small relative to the size of the object from which it projects or is attached. In one embodiment, the tab can interact with another part or piece of material from the same object or a second object.

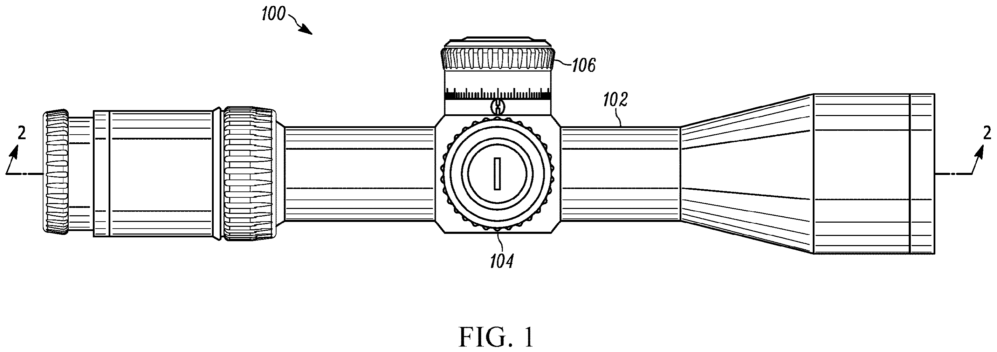

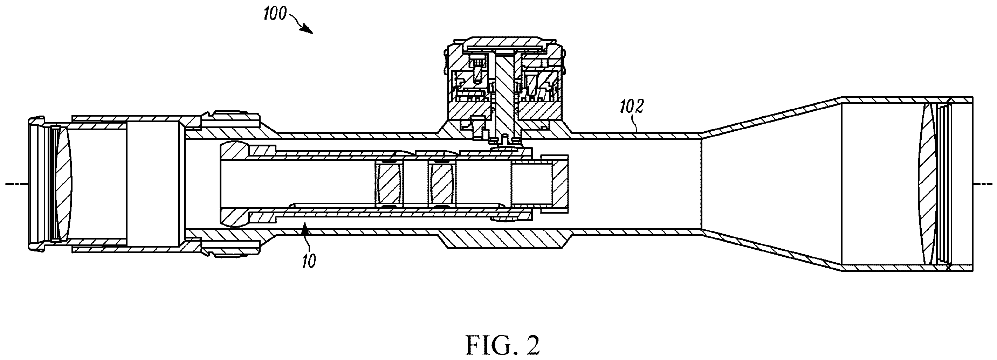

Typical optical sighting devices like the riflescope 100 shown in FIGS. 1-2 have a main tube 102 that includes at least windage and elevation turrets 104, 106, and a parallax adjustment knob (not shown). Other adjustment knobs and/or mounting brackets may also be included on the main tube. As depicted in FIG. 2, the erector tube 10 is mounted coaxially within the main tube 100 and includes channels that engage the windage and elevation turrets, as well as the parallax adjustment knob. Rotating any of the aforementioned turrets 104, 106 or knobs causes the erector tube 10 to displace, which allows a user to compensate for various environmental factors present at the time of sighting, and in the case of a riflescope, also allows a user to account for bullet drop as well.

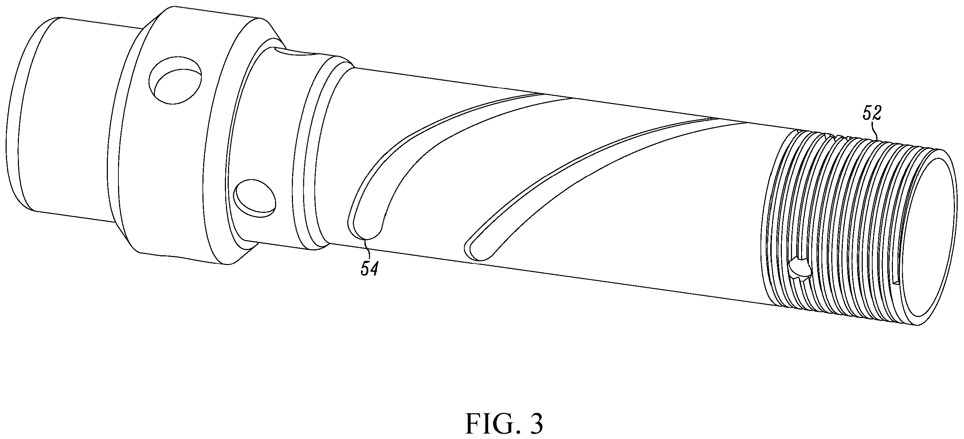

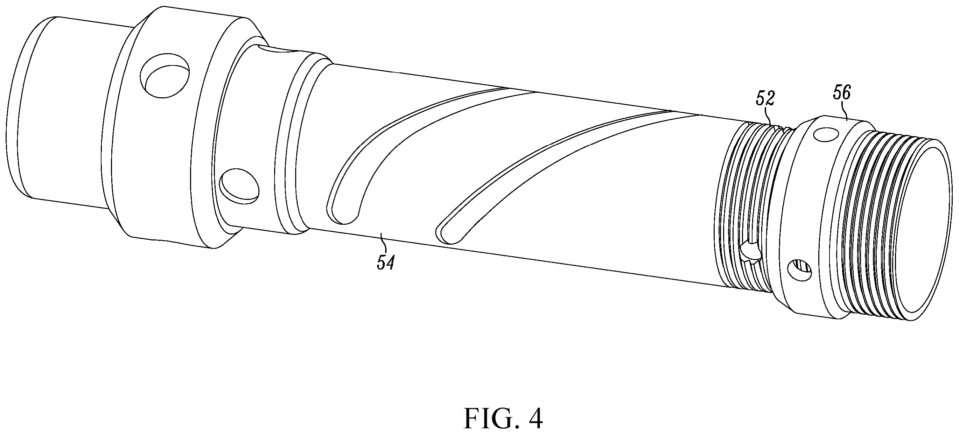

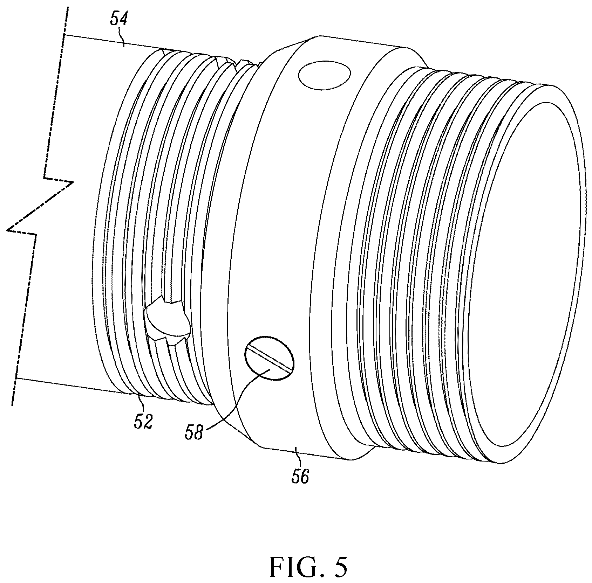

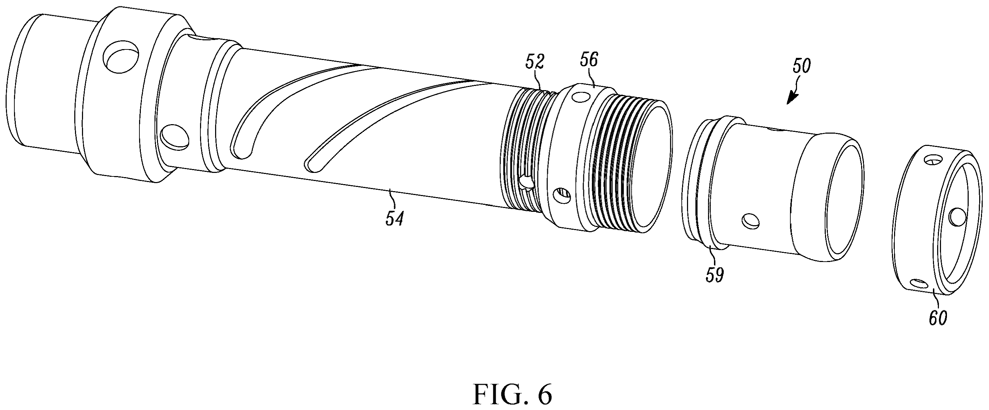

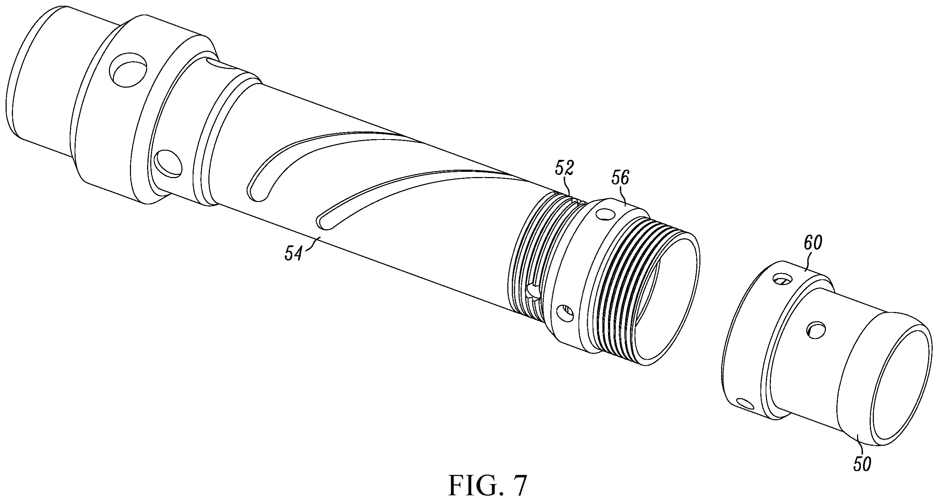

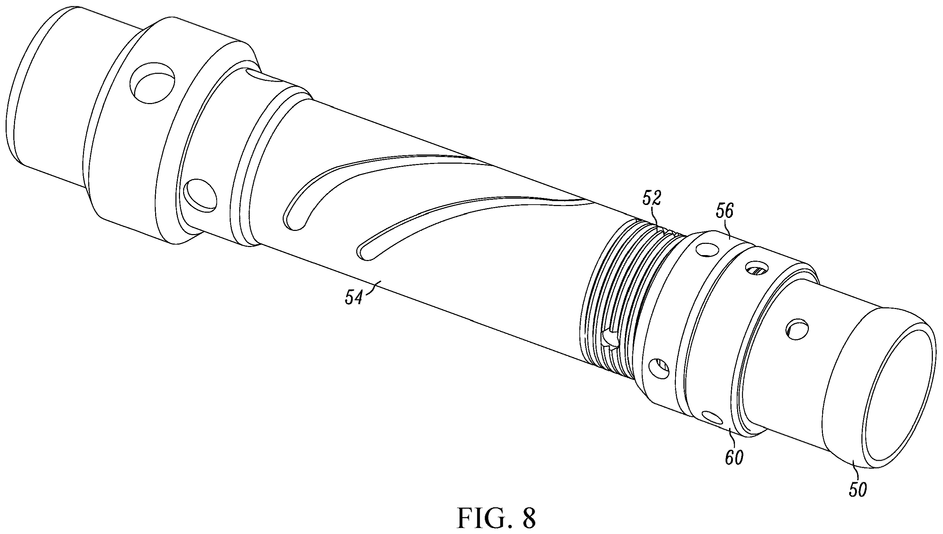

FIGS. 3-8 show how a typical reticle cell 50 is attached to a first focal plane 52 of a typical erector tube 54. Erector tube 54 has a threaded portion 56 at the first focal plane 52 and a nut 56 is partially threaded onto the threaded portion 56 (see at least FIG. 4). An assembler sets the position of the nut 56 in relation to the erector tube 54 and secured it by tightening at least one set screw 58 (see at least FIG. 5). After the nut 56 is installed, a reticle cell 50 is attached to the nut so that the nut acts as a bridge between the reticle cell and the erector tube 54 (see at least FIG. 6). There is a flange 59 on the reticle cell 50 that mates against a face of the nut 56 to prevent the reticle cell from being threaded too far onto the nut. Finally, a clamping nut 60 is installed over the reticle cell 50 and engages the flange 59 is threaded onto the nut 56 to secure the reticle cell to the nut (see at least FIGS. 7 and 8). The various threaded attachments allow an assembler to adjust the position of the reticle cell 50 for both focus and for cant. The nut can be rotated to position the reticle in focus. After focusing, the nut is secured with the set screws.

However, this type of assembly is very labor intensive because it requires numerous adjustments by hand to dial-in the focus and cant of the reticle cell in relation to the erector tube 54. Finally, even after the initial adjustments are made, it is sometimes difficult to maintain the positions of the reticle cell 50 and the nuts 56, 58 while the clamping nut 60 is tightened.

In addition, typical reticles are aligned to the erector tube using a "view ring" which results in a tunneling to the field of view. In many instances, as the scope is adjusted, the view ring causes the tunneling to be asymmetrical, which can be distracting to the user, and in some cases may cause the user to incorrectly use the scope.

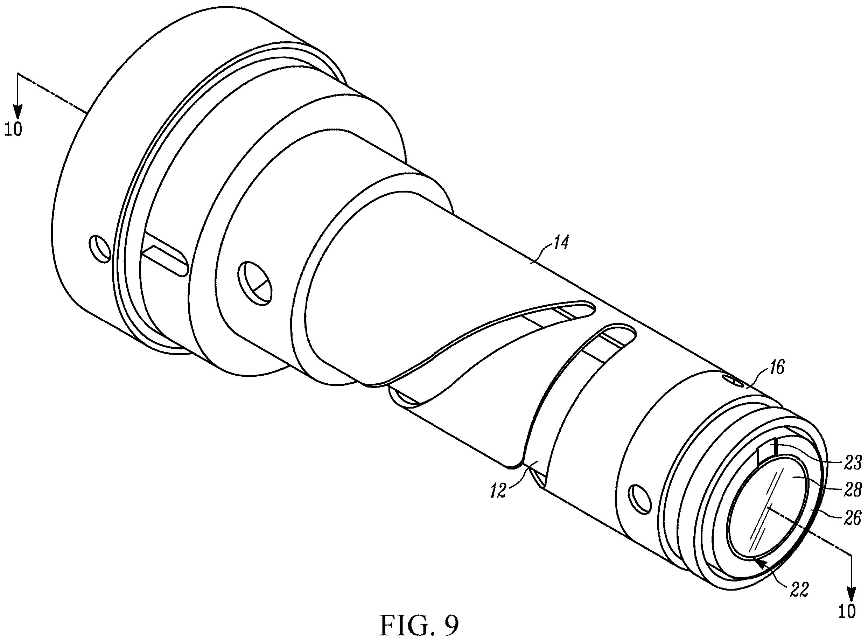

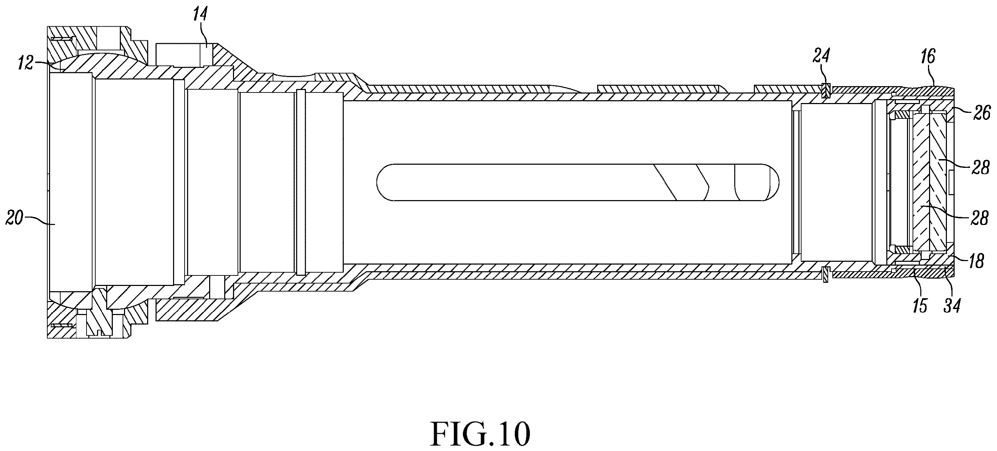

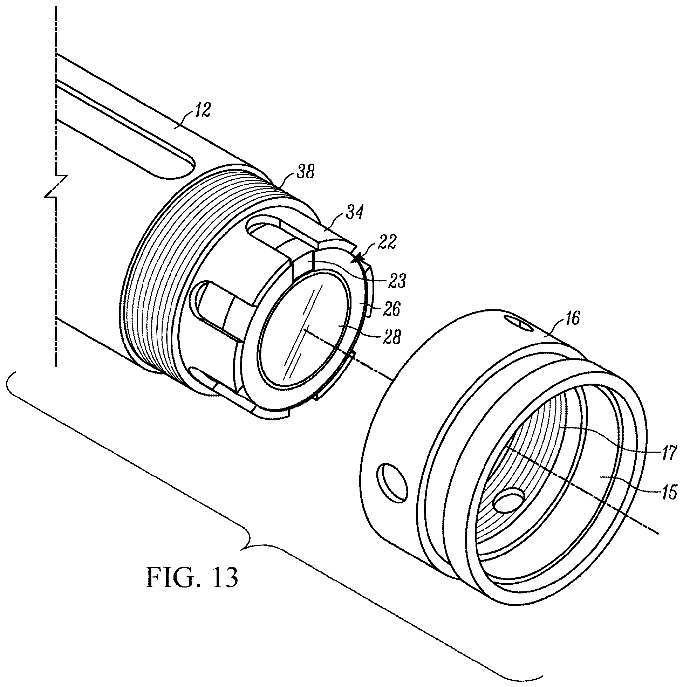

FIGS. 9-13 show one embodiment of an erector tube 10 in accordance with the methods and apparatuses disclosed herein. The erector tube 10 includes an inner tube 12, an outer tube 14, and a reticle collet lock ring 16 having a generally cylindrical shape (see at least FIG. 9). The reticle collet locking ring includes a tapered inner surface 15 and internal threads 17 (see at least FIGS. 10, 11 and 13). The erector tube has an objective lens end 18 and an eyepiece end 20 (see at least FIG. 10). In one embodiment, a reticle cell 22 is secured at the objective end 18 and at a focal plane 24.

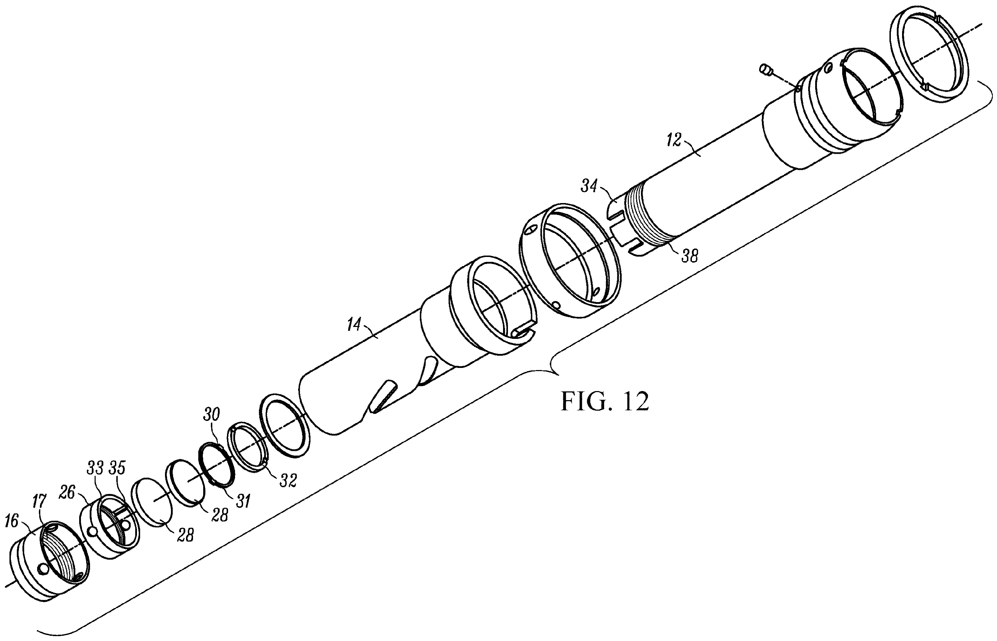

The reticle cell 22 includes a reticle ring 26 and reticle glass 28 (see at least FIG. 12). In one embodiment, there are two pieces of reticle glass 28, but more or less pieces of glass may be used including but not limited to 1, 2, 3, 4, 5, and greater than 5.

In another embodiment, the reticle glass 28 could be replaced by Liquid Crystal Display (LCD) or organic liquid emitting display (OLED), or any other suitable reticle displaying option.

The reticle glass 28 is held inside the reticle ring 26 by a retention washer 30. The retention washer 30 is captured between a glass retention ring 32, which engages internal threads 33 on the reticle ring 26 and the reticle glass 28 (see at least FIG. 12).

In one embodiment, the glass retention ring 32 is made of aluminum but any other suitable material may be used including but not limited to copper, tin, plastic, aluminum alloys, steel, polyurethane composites, and superplastic materials. In another embodiment, cement may be used to further secure the reticle glass 28 to the reticle ring 26.

In one embodiment, the retention washer 30 further includes tabs 31 that engage corresponding channels 35 on the inside of the reticle ring 26 to prevent rotation of the reticle glass 28 as the glass retention ring 32 is tightened (see at least FIG. 12). Once the reticle glass 28 is properly aligned to the reticle ring 26, the glass retention ring 32 is tightened to secure the reticle glass to the reticle ring to form a fully assembled reticle cell 22.

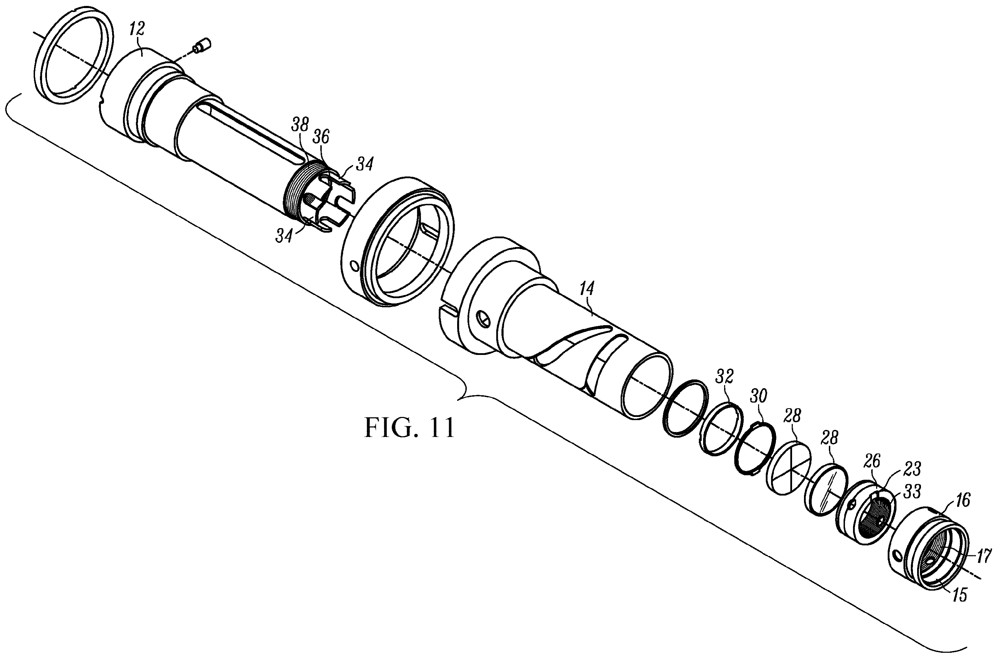

As depicted in FIG. 11, a plurality of collet leaves 34 are formed at objective lens end 18. A reticle cell stop flange 36 is disposed inside the inner tube 12 at the base of the plurality of collet leaves 34. External threads 38 are formed on the outside surface of the inner tube 12 at the base of the plurality of collet leaves 34. The collet leaves 34 have a generally rectangular profile, but any suitable shape may be used including but not limited to a square profile, a triangular profile, a hexagonal profile, and a circular profile.

To secure the reticle cell 22 to the erector tube 10, the reticle cell is inserted into the objective lens end 18 and positioned in front of the reticle cell stop flange 36 that prevents the reticle cell 22 from being inserted too far into the inner tube 12. The precise location of the reticle cell 22 is adjusted so that the reticle glass 26 is in perfect focus when viewed through the riflescope. Once the reticle cell 22 is inserted into the objective lens end 18, it is rotated into rotational alignment with the erector tube 10 using a tool that engages a keyway 23 on the front face of the reticle cell. Next, the reticle collet lock ring 16 is inserted over the plurality of collet leaves 34 so that the internal threads 17 engage the external threads 38. As the reticle collet lock ring 16 is tightened onto the inner tube 12, the tapered inner surface 15 progressively engages the plurality of collet leaves 34, causing the collet leaves to deflect toward the center of the inner tube 12, which engages an outside surface of the reticle cell 22, thereby securing the reticle cell in place. Using collet leaves 34 and collet lock ring 16 allows a custom setting and retention of the reticle cell 22 much more quickly than current methods.

In one embodiment, a spanner wrench may be used to tighten the reticle collet lock ring 16. Of course, any other suitable tool may also be used to tighten the reticle collet lock ring 16 without departing from the methods and apparatuses disclosed herein.

Unlike existing designs that require dialing-in the reticle cell 22 positions in a series of adjustments and re-adjustments, the methods and apparatuses described herein allow the axial, rotational, and other adjustments to be made simultaneously with only the collet lock ring 16 being used to secure the reticle cell 22 once it is in the desired position. The collet leaves 34 and collet lock ring 16 use less parts, and take up less space than traditional attachment mechanisms, which allows more room to show field of view and elevation/windage travel information.

Additionally, using collet leaves 34 and collet lock ring 16 to secure the reticle cell 22, results in a more secure connection than presently used methods, which avoids losing the adjustment during rifle recoil.

Although the invention has been herein described in what is perceived to be the most practical and preferred embodiments, it is to be understood that the invention is not intended to be limited to the specific embodiments set forth above. Rather, it is recognized that modifications may be made by one of skill in the art of the invention without departing from the spirit or intent of the invention and, therefore, the invention is to be taken as including all reasonable equivalents to the subject matter of the appended claims and the description of the invention herein.

Aspects and embodiments of the invention are set out in the following numbered clauses which are not claims:
1. A reticle cell comprising one or more pieces of reticle glass held inside a reticle ring by a retention washer; and a retention ring that retains the retention washer and engages the reticle ring and the reticle glass.
2. The reticle cell of Clause 1, wherein the retention washer has tabs that engage corresponding channels on the inside of the reticle ring to prevent rotation of the reticle glass.
3. The reticle cell of Clause 1, further comprising cement to secure the reticle glass within the reticle ring.
4. The reticle cell of Clause 1, wherein the retention ring is made of aluminum.
5. The reticle cell of Clause 1 having two pieces of reticle glass.
6. An erector tube comprising the reticle cell of Clause 1.
7. The erector tube of Clause 6, further comprising an inner tube, wherein the reticle cell is disposed inside collet leaves arranged around an objective lens of said inner tube.
8. The erector tube of Clause 7 further comprising a reticle collet lock ring that engages the inner tube so that the collet leaves engage the reticle cell to retain the reticle cell within the inner tube.
9. An erector tube comprising the reticle cell of Clause 2.
10. The erector tube of Clause 9, further comprising an inner tube, wherein the reticle cell is disposed inside collet leaves arranged around an objective lens of said inner tube.
11. The erector tube of Clause 11 further comprising a reticle collet lock ring that engages the inner tube so that the collet leaves engage the reticle cell to retain the reticle cell within the inner tube.
12. An erector tube for an optical sighting device comprising:
   an outer tube with a first end and a second end;
   an inner tube disposed within the outer tube having an objective lens end and an eyepiece end;
   the inner tube further including a plurality of collet leaves arranged around the objective lens end and having external threads integrally formed on an outside surface of the inner tube adjacent the plurality of collet leaves;
   a reticle cell having at least one reticle glass held inside a reticle ring by a retention washer and a retention ring;
   a reticle collet lock ring having internal threads and a tapered inner surface adjacent the internal threads; and
   the reticle cell disposed inside the collet leaves; and
   the internal threads of the reticle collet ring engaged with the external threads of the inner tube so that the plurality of collet leaves engage the reticle cell to retain the reticle cell within the inner tube.
13. The erector tube of Clause 12, wherein the retention washer further includes tabs that engage corresponding channels on the inside of the reticle ring to prevent rotation of the reticle glass.
14. The erector tube of Clause 12 further comprising cement to secure the reticle glass within the reticle ring.
15. The erector tube of Clause 9, wherein the retention ring is made of aluminum.

## Claims

1. A reticle cell comprising:
a display (28) held inside a reticle ring (26) by a retention washer (30); and a retention ring (32) that retains the retention washer and engages the reticle ring and the display, wherein the retention washer has tabs (31) that engage corresponding channels (35) on the inside of the reticle ring to prevent rotation of the display.

2. The reticle cell of Claim 1, wherein the display is a liquid crystal display or an organic light emitting display.

3. The reticle cell of Claim 1 or Claim 2, further comprising cement to secure the display within the reticle ring.

4. The reticle cell of Claim 1, Claim 2 or Claim 3, wherein the retention ring is made of aluminum.

5. An erector tube comprising the reticle cell of Claim 1 or of any of Claims 2 to 4.

6. The erector tube of Claim 5, further comprising an inner tube, wherein the reticle cell is disposed inside collet leaves arranged around an objective lens of said inner tube.

7. The erector tube of Claim 6 further comprising a reticle collet lock ring that engages the inner tube so that the collet leaves engage the reticle cell to retain the reticle cell within the inner tube.

8. An erector tube comprising the reticle cell of Claim 2 or of any of Claims 3 to 7.

9. The erector tube of Claim 8, further comprising an inner tube, wherein the reticle cell is disposed inside collet leaves arranged around an objective lens of said inner tube.

10. The erector tube of Claim 9 further comprising a reticle collet lock ring that engages the inner tube so that the collet leaves engage the reticle cell to retain the reticle cell within the inner tube.

11. An erector tube for an optical sighting device comprising:
an outer tube with a first end and a second end;
an inner tube disposed within the outer tube having an objective lens end and an eyepiece end;
the inner tube further including a plurality of collet leaves arranged around the objective lens end and having external threads integrally formed on an outside surface of the inner tube adjacent the plurality of collet leaves;
a reticle cell of Claim 1;
a reticle collet lock ring having internal threads and a tapered inner surface adjacent the internal threads; and
the reticle cell disposed inside the collet leaves; and
the internal threads of the reticle collet ring engaged with the external threads of the inner tube so that the plurality of collet leaves engage the reticle cell to retain the reticle cell within the inner tube.

12. The erector tube of Claim 11, wherein the retention washer further includes tabs that engage corresponding channels on the inside of the reticle ring to prevent rotation of the reticle glass.

13. The erector tube of Claim 11 or Claim 12 further comprising cement to secure the display within the reticle ring.

14. The erector tube of Claim 9, or of any of Claims 10 to 13, wherein the retention ring is made of aluminum.
